# EUROPÄISCHE PATENTSCHRIFT

(11) **EP 2 794 122 B1**
(45) Veröffentlichungstag und Bekanntmachung des Hinweises auf die Patenterteilung: **18.05.2016**
(21) Anmeldenummer: 12799193.3
(22) Anmeldetag: 12.12.2012
(51) Int. Cl.: B05C 17/01, B05C 17/005, B01F 13/00, A61C 5/06, F16H 25/06, B01F 15/02, B01F 15/04

(54) **ANTRIEBSEINRICHTUNG EINER DOSIER- UND MISCHVORRICHTUNG FÜR MEHRKOMPONENTENSTOFFE**
DRIVING EQUIPMENT FOR DOSING AND MIXING APPARATUS
SYSTÈME D'ENTRAÎNEMENT D'UN DISPOSITIF DE DOSAGE ET DE MÉLANGE POUR MATIÈRES À PLUSIEURS COMPOSANTS

(30) Priorität: 21.12.2011 EP 11194922
(43) Veröffentlichungstag der Anmeldung: 29.10.2014
(73) Patentinhaber: Sika Technology AG, 6340 Baar (CH)
(72) Erfinder: BUCK, Manuel, CH-5412 Gebenstorf (CH)
(74) Vertreter: Sika Patent Attorneys
(86) Internationale Anmeldenummer: PCT/EP2012/075192
(87) Internationale Veröffentlichungsnummer: WO 2013/092334

(56) Entgegenhaltungen:
- EP-A1- 1 279 379
- EP-A2- 0 057 465
- WO-A1-2008/076941
- WO-A1-2011/025831
- US-A1- 2009 039 113

## Beschreibung

### Technisches Gebiet

Die Erfindung betrifft eine Antriebseinrichtung einer Dosier- und Mischvorrichtung für Mehrkomponentenstoffe, insbesondere Mehrkomponenten-Klebstoffe, welche mindestens zwei zusammenhängende Kartuschenaufnahmevorrichtungen zur Aufnahme von auswechselbaren Kartuschen mit einzelnen Stoffkomponenten, eine Austriebsvorrichtung zum gleichzeitigen Austreiben der Stoffkomponenten aus den Kartuschen durch Komponentenausgänge mit Hilfe von in die Kartuschenaufnahmevorrichtung bzw. Kartuschen eintauchende Austriebskolben, wobei mindestens ein Austriebskolben ein Gewinde aufweist, welches durch eine Drehung einen Vorwärtstrieb dieses Austriebskolbens erzeugen kann, und eine Mischvorrichtung aufweist, welche mit den Komponentenausgängen verbunden ist, die ausgetriebenen Stoffkomponenten mischt und diese gemischt austrägt.

### Stand der Technik

Eine Dosier- und Mischvorrichtung mit dem vorstehend genannten Aufbau ist Gegenstand der Europäischen Patentanmeldung 10 196 972.3 der Anmelderin.

Vorbekannt ist aus der DE 3 233 366 A1 eine ähnliche Dosier- und Mischvorrichtung zum Mischen einer Dental-Abdruckmasse. Diese Vorrichtung umfasst ein als Wegwerfteil ausgebildetes Rührwerk mit einem Basiskörper, welcher eine Mischkammer, mehrere voneinander gesondert in die Mischkammer mündende Zuführkanäle für die Komponenten der Abdruckmasse sowie eine Auslassöffnung für die gemischte Abdruckmasse aufweist. Das Rührwerk umfasst weiterhin einen in der Mischkammer drehbar angeordneten Rührer, der von einer Antriebsvorrichtung, an der das Rührwerk abnehmbar gehalten ist, angetrieben wird. Die Komponenten der Abdruckmasse sind in Vorratszylindern enthalten und werden durch Kolben in die Mischkammer eingeschoben und nach Mischung über die Auslassöffnung in den Abdrucklöffel hinein ausgeschoben. Mittels einer Steuerung kann die Vorschubgeschwindigkeit von Stellantrieben der Kolben variiert werden, so dass sowohl das die Abbindezeit der Abdruckmasse bestimmende Verhältnis der Kolbenvorschubgeschwindigkeit als auch den Gesamtvorschub beziehungsweise die Vorschubdauer und damit die Abdruckmassenmenge gesteuert werden kann.

Zum Stand der Technik wird im Übrigen hingewiesen auf die EP 0 057 465 A2, WO 2011/025831 A1, US 2009/039113 A1, WO 2008/076941 A1 sowie EP 1 279 379 A1.

### Darstellung der Erfindung

Es ist Aufgabe der Erfindung, eine zuverlässige und präzise arbeitende Antriebseinrichtung für eine Dosier- und Mischvorrichtung der oben genannten Art bereitzustellen.

Diese Aufgabe wird durch eine Antriebseinrichtung mit den Merkmalen des Anspruchs 1 gelöst. Zweckmäßige Fortbildungen des Erfindungsgedankens sind Gegenstand der abhängigen Ansprüche.

Die Erfindung schließt die Überlegung ein, beim Antrieb einer Dosier- und Mischvorrichtung mit einem selbstschneidenden Antriebskolben sicherzustellen, dass jener Kolben während des Betriebs ständig in sicherer Kraftübertragungs-Verbindung mit einem Antriebsmotor steht. Sie schließt weiter die Überlegung ein, dies mittels eines spiralverzahnten nicht selbsthemmenden Spindelantriebs zu realisieren. Weiterhin gehört zur Erfindung der Gedanke des Vorsehens einer Getriebeeinheit, deren Abtriebsrad eine an die Verzahnung der Austriebsstange mit Spindelabschnitt angepasste Verzahnung hat. Außerdem schließt die Erfindung den Gedanken ein, am (in Gebrauchslage) vorderen Ende der besagten Austriebsstange ein Eingriffselement zum Eingreifen in den Austriebskolben vorzusehen.
Mit der vorgeschlagenen Lösung wird insbesondere erreicht, dass eine Antriebskraft in den durch Drehung selbsttätig einen Vorwärtstrieb erzeugenden (insbesondere einen selbstschneidenden) Kolben selbsttätig eingekoppelt wird. Dies geschieht speziell und in vorteilhafter Weise erst dann, wenn beim parallelen Austrieb (mindestens) einer anderen Komponente, der mittels eines herkömmlichen Austriebskolbens erfolgt, eine vorbestimmte (Gegen-)Druckschwelle überschritten wird. Gemäß den Anforderungen vieler Anwendungsfälle wird so ein Austrieb derjenigen Komponente, die mit dem selbstschneidenden Kolben ausgetrieben wird, dann und solange unterbunden, wenn und solange nicht zugleich eine andere Komponente gefördert wird, die mit der erstgenannten zu vermischen ist. Zudem kann bei der Neubeladung der Dosier- und Mischvorrichtung die Austriebsstange des selbstschneidenden Kolbens durch einfaches Zurückschieben (ohne erheblichen Widerstand und ohne zusätzliche Manipulationen) wieder in ihre Ausgangsposition gebracht werden.

Der hier vorgeschlagene Antrieb berücksichtigt insbesondere den Umstand, dass bei einer Dosier- und Mischvorrichtung der in Rede stehenden Art, mit (mindestens) einem durch Drehung selbsttätig einen Vorwärtstrieb erzeugenden Austriebskolben, für diesen keine nennenswerte Axialkraft, sondern lediglich ein hinreichender Drehmoment bereitgestellt werden muss. Im Prinzip muss die Axialkraft lediglich so groß sein, dass die Austriebsstange nicht den Kontakt mit dem Austriebskolben verliert.

Im Hinblick auf die vorstehend erwähnten Überlegungen und vorteilhaften Wirkungen erscheint eine Ausführung als vorteilhaft, bei der der spiralverzahnte Spindelabschnitt eine große Steigung der Spiralverzahnung zwischen 45° und 65°, spezieller zwischen 50° und 61°, aufweist.

In weiteren zweckmäßigen Ausführungen ist das Eingriffselement am Ende der Austriebsstange als Mehrkantelement, Torx- oder Klauenelement ausgebildet. Es ist natürlich zu gewährleisten, dass die Gestalt des Eingriffselements mit der Gestalt einer entsprechenden Aus- oder Anformung auf der (in Gebrauchslage) Rückseite des Austriebskolbens mindestens insoweit korrespondiert, als dies zur Übertragung der im Anwendungsfall geforderten Drehmomentbeträge erforderlich ist. Hierzu muss die geometrische Gestalt vom Eingriffselement und der Eingriffsöffnung nicht notwendigerweise identisch sein. In einer zweckmäßigen Ausgestaltung ist das Eingriffselement korrespondierend zu einer Eingriffseinrichtung am Austriebskolben selbstfindend ausgebildet. Hierdurch lassen sich "Leerlauf"Phasen des Antriebs und Schädigungen des Eingriffsbereichs des Austriebskolbens weitgehend vermeiden.

In kostengünstiger und auch funktionsseitig vorteilhafter Ausführung bestehen die spindelartige Austriebsstange im Wesentlichen aus Stahl und der Eingriffsbereich des Austriebskolbens im Wesentlichen aus Kunststoff. Es sind aber auch andere Materialpaarungen möglich und für spezielle Anwendungen ggfs. sinnvoll; so kann die Spindel auch ganz oder teilweise aus einer Nichteisenlegierung, wie Messing oder Bronze oder einer Aluminiumlegierung, bestehen, und auch in den üblicherweise im wesentlichen aus Kunststoff gefertigten Austriebskolben kann ggfs. ein aus Metall gefertigtes Gegenstück zum Spindel-Eingriffselement eingesetzt sein.

In ähnlicher Weise ist in einer weiteren Ausführung vorgesehen, dass die spindelartige Austriebsstange im Wesentlichen aus Stahl und das innen verzahnte Abtriebsrad im Wesentlichen aus Kunststoff bestehen. Auch hier sind andere Materialpaarungen, etwa gemäß den oben genannten Beispielen, möglich und u. U. sinnvoll.

In einer weiteren vorteilhaften Ausführung ist vorgesehen, dass im vorderen Bereich der Austriebsstange, außerhalb des spiralverzahnten Spindelabschnitts, ein mitlaufendes Bremselement zur Gewährleistung einer Axialbewegung der Austriebsstange auch im Leerlauf vorgesehen ist. Die Besonderheiten der Dosier- und Mischeinrichtung, für die die vorgeschlagene Antriebseinrichtung bestimmt ist, sichern zwar die Bereitstellung einer Axialkraft (Austriebskraft) unter Last, also im in den Austriebskolben eingekoppelten Zustand der Austriebsspindel. Es sind jedoch zusätzliche Mittel vorzusehen, um auch im Leerlauf der Antriebseinrichtung eine Axialbewegung zu erzeugen, die letztlich auch dazu führt, dass die Austriebsstange den Austriebskolben überhaupt findet. Das erwähnte Bremselement stellt dies sicher.

In einer ersten Ausgestaltung ist das mitlaufende Bremselement als mitlaufende Kunststoffbremse ausgebildet. Eine weitere Ausführung zeichnet sich dadurch aus, dass das mitlaufende Bremselement als mitlaufendes Schlingfedergehäuse ausgebildet ist.

Da im praktischen Betrieb der Dosier- und Mischvorrichtung feststellbar sein soll, ob der mit dem Gewinde versehene Austriebskolben korrekt arbeitet, also tatsächlich vorgeschoben wird und hierdurch die entsprechende Komponente austrägt, weist eine weitere Ausführung auf der Austriebsstange des mit dem Gewinde versehenen Austriebskolbens ein Positionsmarkierungselement zur, insbesondere optischen, Erfassung der axialen Position der Austriebsstange und somit indirekt des Austriebskolbens auf. In einer der vorgenannten Ausführungs-Aspekte sinnvoll kombinierenden Variante ist vorgesehen, dass das Positionsmarkierungselement durch das Mitlaufen des Bremselements gebildet oder an diesem angebracht ist.

In einer weiteren Ausführung der Erfindung ist, die Getriebeeinheit als Planetengetriebeeinheit (der Antriebsmaschine) ausgebildet, die ein primäres Abtriebsrad umfasst. Weiter ist bevorzugt eine schaltbare Kupplungseinrichtung vorgesehen, die dann in vorteilhafter Weise ein Kupplungselement mit einem Antriebsritzel, welches mit dem primären Abtriebsrad im Eingriff steht, und ein weiteres Kupplungselement umfasst, welches als das innen verzahnte Abtriebsrad der Getriebeeinheit ausgebildet ist.

Die weiter oben bereits erwähnte wünschenswerte Bindung des Austrags der mit dem selbstschneidenden Austriebskolben ausgetriebenen Komponente an das gleichzeitige Austreiben (mindestens) einer weiteren Komponente wird besonders verlässlich in einer weiteren Ausführung der Erfindung realisiert. Bei dieser ist die Getriebeeinheit zum Antrieb des mit dem Gewinde versehenen Austriebskolbens und mindestens eines weiteren, über eine Zahnstange angetriebenen Austriebskolbens einer anderen Komponente ausgebildet, und sie hat eine unter Gegendruck beim Austreiben der anderen Komponente axial verschiebliche Getriebebaugruppe. Hierbei ist das eine Kupplungselement der schaltbaren Kupplungseinrichtung in axialer Richtung im Wesentlichen fest bezüglich der verschieblichen Baugruppe positioniert, derart, dass es sich unter dem Gegendruck beim Austrag der anderen Komponente mit jener Baugruppe verschiebt. Hierdurch kommt das erste Kupplungselement in Eingriff mit dem anderen, fest bezüglich des Gerätegehäuses angeordneten Kupplungselement.

Im Bereich der vorliegenden Erfindung liegt schließlich auch ein Applikationsgerät für Mehrkomponentenstoffe, insbesondere Mehrkomponenten-Klebstoffe, mit einer Antriebseinrichtung nach einem der vorangehenden Ansprüche, mit einer integrierten elektrischen Antriebsmaschine und Akku-Stromversorgung für diese sowie einer Bedien- und Steuereinheit.

### Kurze Beschreibung der Zeichnung

Im Folgenden wird die Erfindung anhand der bevorzugten Ausführungsbeispiele mit Hilfe der Figuren näher beschrieben, wobei nur die zum Verständnis der Erfindung notwendigen Merkmale dargestellt sind. Selbstverständlich ist die Erfindung nicht auf gezeigte und beschriebene Ausführungsbeispiele beschränkt.

Es zeigen im Einzelnen:
- Fig. 1: eine Seitenansicht eines erfindungsgemäßen Applikationsgerätes für einen 2-Komponentenkleber;
- Fig. 2: eine Darstellung des Aufbaus der Getriebeeinheit 8 des Applikationsgerätes nach Fig. 1,
- Fig. 3A und 3B: perspektivische Darstellungen einer Ausführungsform von dem Antrieb der Zahnstange 4 dienenden Getriebekomponente,
- Fig. 4: eine Prinzipskizze (in Art einer perspektivischen Darstellung) zur Erläuterung einer weiteren Variante des Antriebs der Zahnstange 4,
- Fig. 5: eine perspektivische Darstellung einer Ausführungsform der zweiten Austriebsstange 5 des Applikationsgerätes nach Fig. 1,
- Fig. 6: eine Schnittansicht einer Ausführungsform der Getriebeeinheit 8 des Applikationsgerätes nach Fig. 1,
- Fig. 7A und 7B: Prinzipskizzen (in Art perspektivischer Darstellungen) eines Details der zweiten Austriebsstange nach Fig. 5,
- Fig. 8: ein Blockschaltbild einer Ausführungsform der zur Antriebseinrichtung 1 B des Applikationsgerätes nach Fig. 1 gehörenden Sensorik und
- Fig. 9A und 9B: Motorstrom-Zeit-Diagramme zu Erläuterung zweier Ausführungsformen eines Steuerungsablaufs der Antriebssteuerung.

### Weg zur Ausführung der Erfindung

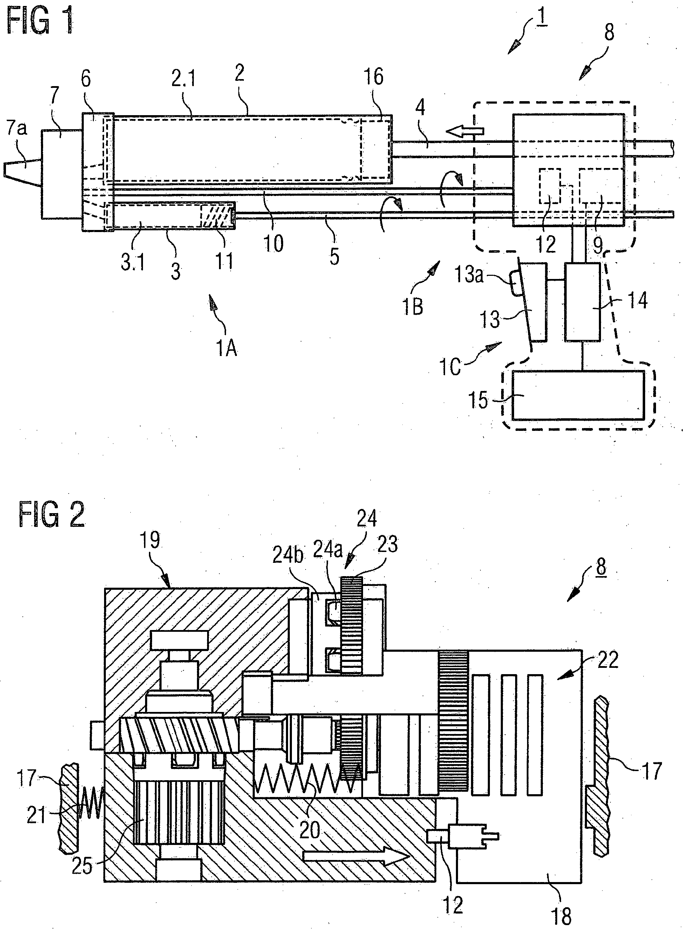

Fig. 1 zeigt eine Seitenansicht (in schematisierter Darstellung) eines erfindungsgemäßen Applikationsgerätes 1, wobei als wesentliche Komponenten eine Dosier- und Mischvorrichtung 1 A und eine zugehörige Antriebseinrichtung 1 B und schließlich ein Gerätekörper 1C gesondert bezeichnet sind.

Die Dosier- und Mischvorrichtung 1 A umfasst beispielhaft dargestellt zwei Kartuschenaufnahmevorrichtungen 2 und 3 unterschiedlichen Durchmessers und unterschiedlicher Länge für einen Schlauchbeutel 2.1 und eine feste Kartusche 3.1 Die größere Kartuschenaufnahmevorrichtung 2 wird mit Hilfe eines axial verschieblichen ersten Antriebskolbens ("Linearkolbens") 16 betätigt, der mit einer ersten Antriebsstange (Zahnstange) 4 verbunden ist und durch diese linear in die Kartuschenaufnahmevorrichtung 2 vorgetrieben wird. Die Kartuschenaufnahmevorrichtung 3, die einen wesentlich kleineren Durchmesser aufweist und außerdem wesentlich kürzer als die Kartuschenaufnahmevorrichtung 2 ist, wird erfindungsgemäß durch einen zweiten Antriebskolben ("Drehkolben") betätigt, welcher auf der Außenseite ein Gewinde aufweist, das sich in die Innenwandung der Kartuschenaufnahmevorrichtung 3 oder einer dort eingesetzten Kartusche 3.1 einprägt und durch seine Rotation einen Vortrieb erzeugt.

Die Antriebseinheit 1 B umfasst eine Getriebeeinheit 8, welche bei einer einzigen Antriebseingangsseite drei unterschiedliche Antriebsausgangsseiten aufweist. Dies sind einerseits ein Ausgang für die linear vorgeschobene Zahnstange 4, andererseits ein Ausgang für eine zweite Austriebsstange 5 und schließlich ein Ausgang für eine ebenfalls rotierende Antriebswelle 10, welche einen Rotationsmischer 7 betreibt. Die beiden Kartuschenaufnahmevorrichtungen 2 und 3 sind ausgangsseitig mit einer Kartuschenkupplung 6 verbunden, durch die auch das in den Kartuschenaufnahmevorrichtungen 2 und 3 befindliche Material von den Komponentenausgängen zum Rotationsmischer 7, der ebenfalls mit der Kartuschenkupplung 6 verbunden ist, befördert wird. Die Bauweise eines solchen Rotationsmischers ist bekannt. Er verfügt über eine vorne angebrachte Austriebsspitze 7a, durch welche das gemischte Material letztendlich ausgetragen wird.

Die Getriebeeinheit 8 wird in der hier gezeigten Ausführungsform der Dosier- und Mischvorrichtung 1A mit Hilfe eines Elektromotors 9 angetrieben. In ihr ist im übrigen ein Mikroschalter 12 vorgesehen, dessen Funktion weiter unten beschrieben wird. Der Gerätekorpus 1C umfasst im wesentlichen eine Bedieneinheit 13 mit einem manuell zu betätigenden Ein-/Ausschalter 13a, eine Betriebssteuereinheit 14 und einen Akkupack 15.

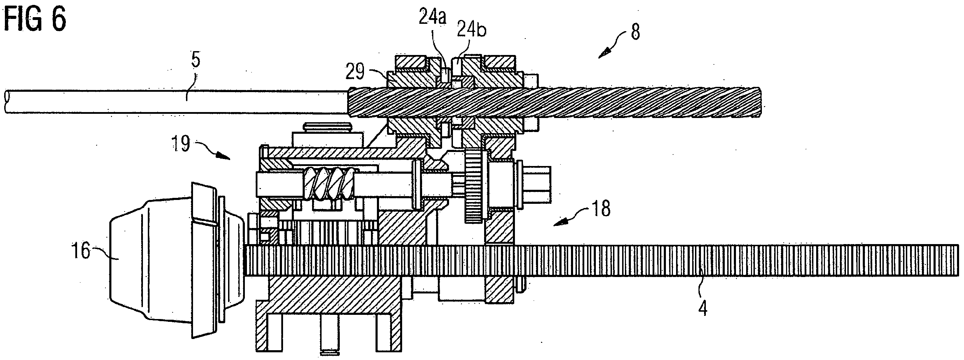

Fig. 2 zeigt den Aufbau einer Ausführungsform der Getriebeeinheit 8 etwas genauer; es wird hierzu auch auf Fig. 6 und die Ausführungen weiter unten hingewiesen. Es ist zu beachten, dass die Darstellungsweise von Fig. 2 und weiteren Figuren insofern von derjenigen in Fig. 1 abweicht, als in Fig. 2 die zur Zahnstange 4 gehörenden Getriebekomponenten unten und die zur zweiten Austriebsstange 5 gehörenden Komponenten oben liegen.

Die Getriebeeinheit 8 umfasst eine erste, bezüglich einer Wandung eines Gerätegehäuses 17 des Applikationsgerätes ortsfeste Baugruppe 18 und eine zweite, im Gerätegehäuse verschieblich gelagerte Baugruppe 19. Beide Getriebebaugruppen 18 und 19 sind durch eine (hier symbolisch dargestellte) Gegendruckfeder 20 elastisch gegeneinander verspannt, und die verschiebliche Baugruppe 19 ist gegenüber dem Gerätegehäuse 17 mit einem weiteren Federelement 21 elastisch abgestützt, welches im weiteren auch als Andruckfederelement bezeichnet wird. Die erste Baugruppe 18 umfasst ein Planetengetriebe 22, welches mit einem (nicht dargestellten) Antriebsritzel des Antriebsmotors im Eingriff steht, sowie den Abtrieb 23 zum Antrieb der spindelartigen zweiten Antriebsstange (hier ebenfalls nicht dargestellt) und Abtriebsräder für die erste Austriebstange (Zahnstange) und die Antriebswelle des Mischers, die hier ebenfalls nicht gesondert bezeichnet bzw. dargestellt sind.

Am Abtrieb für die zweite Austriebsstange ist eine schaltbare Kupplung (Klauenkupplung) 24 vorgesehen, die ein bezüglich der ersten Baugruppe 18 ortsfestes erstes Kupplungselement 24a und ein bezüglich der zweiten Baugruppe 19 ortsfestes zweites Kupplungselement 24b umfasst. Eine in der zweiten Baugruppe 19 untergebrachte Getriebekomponente 25 zum Antrieb der ersten Austriebstange (Zahnstange) wird weiter unten beschrieben.

An der ersten Baugruppe 18 ist der Mikroschalter 12 fest angebracht, der konstruktiv so ausgestaltet und positioniert ist, dass er in einer vorbestimmten Verschiebungsposition der zweiten Baugruppe 19 betätigt wird.

Die Funktion der zweiteiligen Ausführung der Getriebeeinheit 8 mit den erwähnten Federabstützungen und dem Mikroschalter ist, vereinfacht erläutert, wie folgt:

Im ausgeschalteten Zustand des Applikationsgerätes ist die zweite Baugruppe 19 gegenüber der ersten Baugruppe 18 der Getriebeeinheit 8 durch die Kraft der Gegendruckfeder 20 so weit verschoben, dass das erste und zweite Kupplungselement 24a, 24b der schaltbaren Kupplung 24 außer Eingriff sind und die zweite Baugruppe auch den Mikroschalter 12 nicht berührt. Die genaue Ruheposition der zweiten Baugruppe 19 wird durch geeignete Auswahl der Gegendruckfeder 20 und Andruckfeder 21 in Abstimmung aufeinander eingestellt, ebenso wie das Ansprechverhalten der Lagerung der zweiten Baugruppe bei Inbetriebnahme des Gerätes.

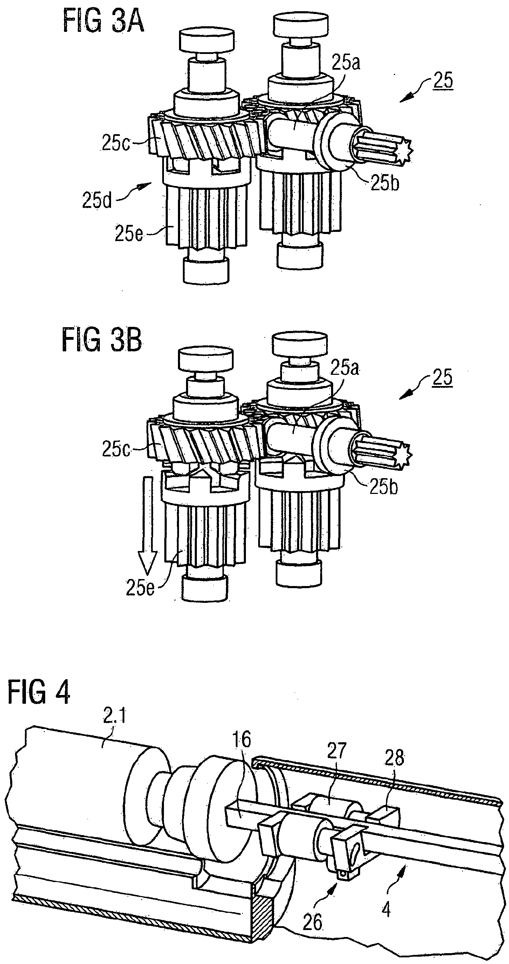

Bei Inbetriebnahme gelangt die Antriebskraft vom Antriebsmotor über das Planetengetriebe 22 und die Getriebekomponente 25 auf die Zahnstange 4 und bewirkt deren Verschiebung in Austreibrichtung der Dosier- und Mischvorrichtung (in Fig. 1 und Fig. 2 nach links). Sobald der erste Austriebskolben 16 auf das ihm zugewandte Ende der gefüllten Kartusche 2.1 trifft, baut sich aufgrund der Viskosität der darin enthaltenen Materialkomponente Reaktionsdruck auf, welcher über die Zahnstange 4 auf deren Antriebsritzel (vgl. Fig. 3A) gelangt und über deren Lager auf die zweite Baugruppe 19 übertragen wird. Sie bewirkt eine Verschiebung der zweiten Baugruppe 19 gegenüber der ersten Baugruppe 18, entgegen der Federkraft der Gegendruckfeder 20. Sobald ein bestimmter Verschiebungsbetrag erreicht ist, kommen die Kupplungselemente 24a, 24b in Eingriff, und der Kraftfluss vom Antriebsmotor gelangt nun auch zur spindelartigen zweiten Austriebsstange 5, wodurch diese in Drehung versetzt wird und den selbstschneidenden Kolben antreibt. Zugleich wird durch die Verschiebung der zweiten Baugruppe 19 der Mikroschalter 12 betätigt; zu der mit diesem Vorgang verbundenen Funktion siehe weiter unten.

Durch diese Konstruktion und den hierdurch bewirkten Ablauf wird sichergestellt, dass ein Austreiben der in der Kartusche 3.1 enthaltenen Komponente B nur dann erfolgt, wenn auch die in der Kartusche 2.1 enthaltene Komponente A eines Mehrkomponentensystems ausgetrieben wird. Dies gilt auch dann, wenn eine bereits teilweise geleerte Kartusche zu Punkt 1 mit der Komponente A in das Gerät eingesetzt und der Betrieb in der voll zurückgezogenen Ausgangsposition der Zahnstange 4 gestartet wird. Diese läuft dann nämlich solange im Leerlauf nach vorn, und die zweite Getriebebaugruppe 19 bleibt in dem gegenüber der ersten Baugruppe 18 verschobenen Ausgangszustand, bis der erste Austriebskolben 16 auf das Ende der nur teilweise gefüllten Kartusche trifft. Erst zu diesem Zeitpunkt wird dort eine Reaktionskraft aufgebaut, die die zweite Baugruppe 19 an die erste Baugruppe 18 andrückt, hiermit die schaltbare Kupplung 24 schließt, wodurch die Antriebskraft auch in die zweite Austriebsstange (Spindel) 5 eingeleitet wird. Auch in diesem Anwendungsfall wird also Komponente B erst zum richtigen Zeitpunkt ausgetrieben.

Fig. 3A und 3B zeigen als Ausführungsform von dem Antrieb der ersten Austriebsstange (Zahnstange) 4 dienenden Getriebekomponenten einen koppelbaren Schneckentrieb 25 im eingekuppelten (Fig. 3A) bzw. ausgekuppelten Zustand (Fig. 3B). Der Schneckentrieb umfasst eine Schnecke 25a mit Zahnwelle, die in einem Axiallager 25b gelagert ist und über ein (hier nicht dargestellt) Abtriebsrad des Planetengetriebes angetrieben wird. Mit der Schnecke 25a stehen zwei Schneckenräder 25c mit Spiralverzahnung im Eingriff, denen jeweils eine Klauenkupplung 25d zugeordnet ist. Mit dem ausrückbaren Kupplungselement dieser Kupplung 25d ist jeweils eine geradverzahntes Antriebsritzel 25e fest verbunden, welches im eingerückten Zustand der Kupplung 25d mit dem Schneckenrad 25c mitläuft und die Antriebskraft auf die mit ihm im Eingriff stehende, hier nicht dargestellte Zahnstange (Ziffer 4 in Fig. 1) überträgt. In dem in Fig. 3B ausgekuppelten Zustand drehen die Ritzel 25e hingegen im wesentlichen frei, so dass die zwischen ihnen gelagerte und mit ihnen im Eingriff stehende Zahnstange praktisch widerstandsfrei axial verschoben werden kann. Dies ermöglicht ein leichtes Zurückziehen zur Neubeladung des Applikationsgerätes mit einer gefüllten Kartusche 2.1 (Fig. 1).

Fig. 4 zeigt eine alternative Realisierung hierfür, und zwar unter Aufgreifen der Bezeichnungsweise in Fig. 1. Hier wird die Zahnstange 4 über ein Stirnradgetriebe 26 und zwei Schnecken 27 angetrieben, welche in einer Kulissenführung 28 schwenkbar gelagert sind. Durch Verschwenken der Schnecken 27 mittels eines nicht dargestellten Betätigungshebels ist ihr Eingriff mit der Zahnstange 4 aufhebbar, wodurch es wiederum ermöglicht wird, die Zahnstange nahezu widerstandsfrei zurückzuziehen. In weiterer Abwandlung des Aufbaus dieses Getriebeteils kann auch vorgesehen sein, dass die Zahnstange 4 über zwei direkt in ihrer Flanken eingreifende Ritzel angetrieben wird, deren Rotationsachsen senkrecht zur Längserstreckung der Zahnstange stehen. Dieses Antriebskonzept ist dem Fachmann vertraut und wird daher hier nicht genauer dargestellt oder beschrieben.

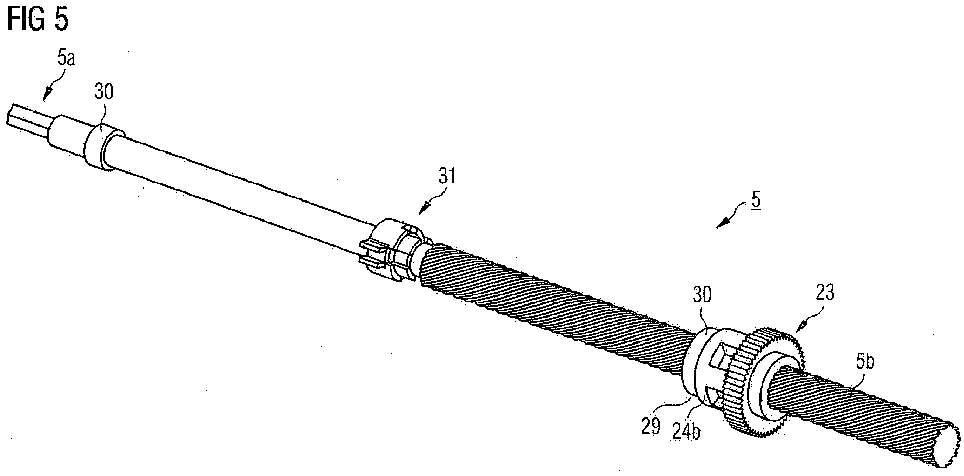

Fig. 5 zeigt in perspektivischer Darstellung als Ausführungsbeispiel die zweite Austriebsstange 5. Diese hat an ihrem einen Ende (in der Figur links) ein Eingriffselement 5a, welches hier als Mehrkant ausgebildet ist, zum Eingriff in eine korrespondierende geformte Eingriffseinrichtung am Austriebskolben 11 (Fig. 1), der gegenüber der Austriebsstange ein separates Teil darstellt und beispielsweise zur Kartusche 3.1 gehören und mit dieser geliefert werden kann. Der gegenüberliegende Endabschnitt 5b der Austriebsstange 5 weist eine Spiralverzahnung mit großer Steigung auf, welche ein nicht selbsthemmendes Verhalten erbringt. In diesem Endabschnitt 5b steht die spindelartige Austriebsstange mit einem korrespondierend zum Außengewinde des Abschnitts 5b innenverzahnten Antriebsrad 29 der Getriebeeinrichtung im Eingriff, welches mit dem weiter oben beschriebenen zweiten Kupplungselement 24b der in Fig. 2 gezeigten schaltbaren Kupplung 24 fest verbunden oder einstückig geformt ist.

Die Austriebsstange bzw. Spindel 5 ist an Lagerstellen 30 gelagert. Zwischen dem mit dem Eingriffselement 5a versehenen Ende und dem spiralverzahnten Endabschnitt 5b ist sie als zylindrische Achse gestaltet und trägt in diesem Bereich eine mitlaufende Bremseinrichtung 31 zur Erzeugung eines minimalen Bremsmoments (im Bereich 0,5 bis 1,0Nm), welches einen axialen Vorschub auch im Leerlauf, d.h. also im eingriffslosen Zustand der Austriebsstange mit dem zugehörigen Austriebkolben, erzeugt. Das Bremselement 31 kann im übrigen als Positionsmarker zur Kennzeichnung der axialen Position der Austriebsstange im Blickfeld eines Bedieners oder gegenüber einer optischen Erfassungseinrichtung dienen oder ein solches Markierungselement tragen. Damit lässt sich erfassen ob die zweite Austriebsstange sich (ebenso wie die erste Austriebsstange) vorwärts bewegt, also ein korrektes Austreiben der Komponente B erfolgt. Ein Versagen (etwa bedingt dadurch, dass kein korrekter Eingriff zwischen der Austriebsstange und dem separaten Austriebskolben besteht) kann hierdurch ohne weiteres erkannt und das Auftreten schadhafter Klebestellen unterbunden werden.

Fig. 6 zeigt in einer Schnittansicht nochmals wesentliche Teile der Getriebeeinheit 8 mit den eingesetzten Austriebsstangen 4 und 5, um deren Positionszuordnung zu verdeutlichen. Hinsichtlich des Schneckentriebs 25' zum Antrieb der ersten Austriebsstange 4 ist die Konstruktion gegenüber der in Fig. 2 sowie Fig. 3A und 3B skizzierten Getriebekomponente 25 etwas modifiziert; dies ist aber für das Verständnis dieses Aspekts der Konstruktion der Antriebseinrichtung unwesentlich.

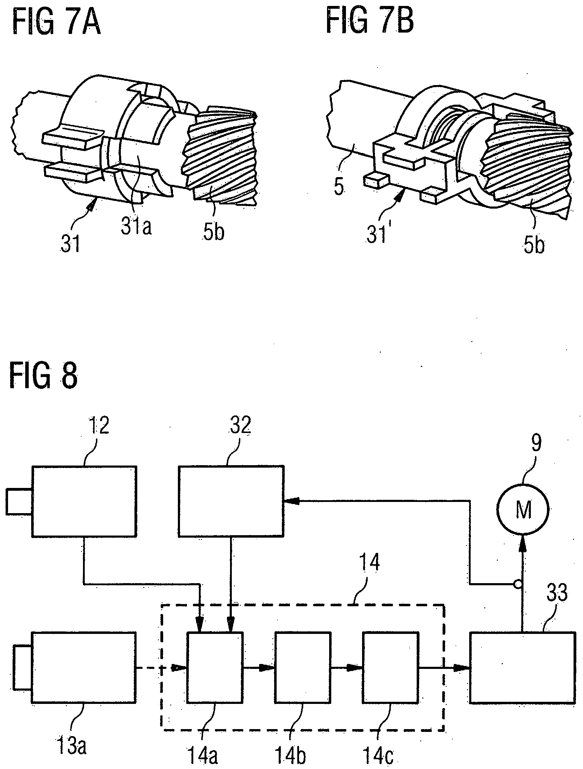

Fig. 7A und 7B zeigen zum einen das bereits in Fig. 5 dargestellte Bremselement 31, welches hier als mitlaufendes Schlingfedergehäuse ausgeführt ist, etwas genauer, und auch die Schlingfeder 31 a ist zu sehen. Fig. 7B zeigt eine Ausführung des Bremselements als mitlaufende Kunststoffbremse 31'. Beide Bremselement-Konstruktionen sind dem Fachmann an sich bekannt und werden daher hier nicht weiter erläutert.

Fig. 8 zeigt an einem Blockschaltbild schematisch den Aufbau einer Sensorik und mit dieser verbundenen Steuerungstechnik der vorgeschlagenen Antriebseinrichtung. Die Sensorik umfasst neben dem bereits erwähnten Mikroschalter 12 den natürlich primär als Bedienelement dienenden Ein-/Ausschalter ("Trigger") 13a bzw. - zusätzlich zu letzterem oder in sensorischer Ersetzung desselben - eine Stromerfassungseinheit 32 zur Erfassung des Motorstromes des Antriebsmotors 9, der diesem über eine Motoransteuerung 33 bereitgestellt wird. Die Antriebssteuereinheit 14 umfasst ein Sensorsignal-Verarbeitungsstufe 14a, ein Verzögerungsglied 14b und eine Steuersignal-Ausgangsstufe 14c.

Über einen in der Sensorsignal-Verarbeitungseinheit 14a implementierten Verarbeitungsalgorithmus werden die Signale vom Mikroschalter 12, die letztlich eine Information über das Austreiben der Komponente A beinhalten, in geeignete Beziehung gesetzt zu Daten, die vom Ein-/Ausschalter 13a oder der Stromerfassungseinheit 32 kommen und letztlich eine Information zum Betriebszustand des Motors beinhalten. Das Verarbeitungsergebnis wird im Verzögerungsglied 14b noch einer geeigneten zeitlichen Bewertung (ebenfalls aufgrund gespeicherter Algorithmen) unterzogen, und im Ergebnis wird durch die Steuersignal-Ausgabeeinheit 14c in allen Betriebsituationen des Applikationsgerätes ein geeignetes Motoransteuersignal ausgegeben.

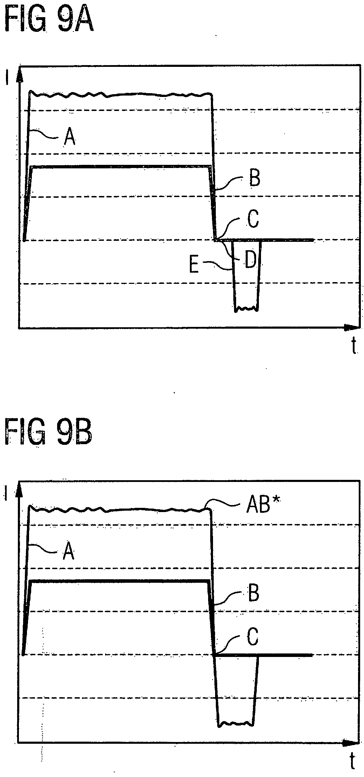

Fig. 9A und 9B zeigen beispielhafte Zeitabläufe anhand von Motorstrom-Zeit-Diagrammen, die jeweils an einem Punkt A mit dem Ansteigen des erfassten Motorstromes I aufgrund einer Einschaltbetätigung des Ein-/Ausschalters 13a beginnen. Am Punkt B in Fig. 9A wird der Ein-/Ausschalter langsam losgelassen; am Punkt C erfasst die Stromerfassungseinheit 32 einen Motorstrom-Wert von 0, danach während einer kurzen Phase D prüft die Sensor-Signalverarbeitungseinheit 14a, ob der Motorstrom beim Wert 0 bleibt, um festzustellen, ob der Ein-/Ausschalter bewusst oder versehentlich losgelassen wurde. Ist ersteres der Fall, kann danach, am Punkt E, ein Signal vom noch gedrückten Mikroschalter 12 derart verarbeitet werden, dass die Steuersignal-Ausgabeeinheit 14c letztlich ein den Rücklauf des Motors 9 bewirkendes Signal ausgibt.

Fig. 9B zeigt eine alternative Realisierung eines vergleichbaren Steuerungs-Ablaufes. Hierbei wird in der Sensorsignal-Verarbeitungseinheit 14a vor dem Zeitpunkt B (Loslassen des Ein-/Ausschalters) in einer Phase AB* der Motorstromwert erfasst und gespeichert und für einen Vergleich mit dem zum Zeitpunkt C gemessenen Stromwert herangezogen. Hier erkennt die Verarbeitungseinheit am Vergleichsergebnis, wenn der Ein-/Ausschalter bewusst losgelassen wurde, und startet, sofern vom Mikroschalter 12 ein entsprechendes Signal vorliegt, den Motorrücklauf zum praktisch gleichen Zeitpunkt.

Mit dem in beiden Varianten beschriebenen Vorgehen soll ein unnötiger MotorRücklauf bei versehentlichem oder nur sehr kurzzeitigem Loslassen des Triggers verhindert, zugleich aber ein aufgrund einer bewussten Beendigung des Austreibvorganges sinnvoll werdender Rücklauf eingeleitet werden, mit dem ein "überschießendes" Austreiben von Mehrkomponentenstoffen, insbesondere der Komponente A (die ja bei einfachem Ausschalten des Motors noch unter Austreibdruck stünde), unterbunden werden. Zugleich wird mit dem (geringfügigen) Rücklauf und mit der Beendigung der Wirkung der von der Komponente A ausgehenden Reaktionskraft erreicht, dass die zweite Getriebebaugruppe 19 in ihrer von der ersten Baugruppe 18 maximal beabstandete Ausgangsstellung zurückwandert, hiermit die Kupplung 24 gelöst wird und der Mikroschalter 12 freigegeben wird. Dies ist ein geeigneter Ausschalt- und Nichtgebrauchszustand des Applikationsgerätes.

Die Ausführung der Erfindung ist nicht auf diese Beispiele beschränkt, sondern ebenso in einer Vielzahl von Abwandlungen möglich, die im Rahmen fachgemäßen Handelns liegen.

## Patentansprüche

1. Antriebseinrichtung (1B) einer Dosier- und Mischvorrichtung (1 A) für Mehrkomponentenstoffe, insbesondere Mehrkomponenten-Klebstoffe, welche mindestens zwei Kartuschenaufnahmevorrichtungen (2, 3) zur Aufnahme von auswechselbaren Kartuschen (2.1, 3.1) mit einzelnen Stoffkomponenten, eine Austriebsvorrichtung zum gleichzeitigen Austreiben der Stoffkomponenten aus den Kartuschen (2.1, 3.1) durch Komponentenausgänge mit Hilfe von in die Kartuschenaufnahmevorrichtung (2,3) bzw. Kartuschen (2.1, 3,1) eintauchende Austriebskolben (11, 16), wobei mindestens ein Austriebskolben (11) ein Gewinde aufweist, welches durch eine Drehung einen Vorwärtstrieb dieses Austriebskolbens (11) erzeugen kann, und eine Mischvorrichtung (7) aufweist, welche mit den Komponentenausgängen verbunden ist, die ausgetriebenen Stoffkomponenten mischt und diese gemischt austrägt, mit einer Getriebeeinheit (8) zum Anschluss einer, insbesondere elektrischen, Antriebsmaschine (9) und
einer spindelartigen Austriebsstange (5) des mit dem Gewinde versehenen Austriebskolbens (11), welche in einem, bezogen auf die Gebrauchslage, hinteren Teil ihrer Längserstreckung einen spiralverzahnten nicht selbsthemmenden Spindelabschnitt (5b) und am vorderen Ende ein Eingriffselement (5a) zum Eingreifen in den Austriebskolben (11) aufweist,
wobei die Getriebeeinheit ein Abtriebsrad (29) mit Innen-Spiralverzahnung aufweist, welche an die Spiralverzahnung des Spindelabschnitts (5b) angepasst ist.

2. Antriebseinrichtung nach Anspruch 1, wobei der spiralverzahnte Spindelabschnitt (5b) eine Steigung der Spiralverzahnung zwischen 45° und 65°, spezieller zwischen 50° und 61°, aufweist.

3. Antriebseinrichtung nach Anspruch 1 oder 2, wobei die spindelartigen Antriebsstange (5) im Wesentlichen aus Stahl und das innen verzahnte Abtriebsrad (29) im Wesentlichen aus Kunststoff besteht.

4. Antriebseinrichtung nach einem der vorangehenden Ansprüche, wobei im vorderen Bereich der Austriebsstange (5), außerhalb des spiralverzahnten Spindelabschnitts (5b), ein mitlaufendes Bremselement (31, 31') zur Gewährleistung einer Axialbewegung der Austriebsstange auch im Leerlauf vorgesehen ist.

5. Antriebseinrichtung nach Anspruch 4, wobei das mitlaufende Bremselement (31') als mitlaufende Kunststoffbremse ausgebildet ist.

6. Antriebseinrichtung nach Anspruch 4, wobei das mitlaufende Bremselement als mitlaufendes Schlingfedergehäuse (31) ausgebildet ist.

7. Antriebseinrichtung nach einem der vorangehenden Ansprüche, wobei auf der spindelartigen Austriebsstange (5) ein Positionsmarkierungselement (31) zur, insbesondere optischen, Erfassung der axialen Position der Austriebsstange und somit indirekt des mit ihr im Eingriff stehenden .. Austriebskolbens (11) vorgesehen ist.

8. Antriebseinrichtung nach Anspruch 7 und einem der Ansprüche 4 bis 6, wobei das Positionsmarkierungselement durch das mitlaufende Bremselement (31) gebildet oder an diesem angebracht ist.

9. Antriebseinrichtung nach einem der vorangehenden Ansprüche, wobei das Eingriffselement (5a) am Ende der Austriebsstange (5) als Mehrkantelement, Torx- oder Klauenelement ausgebildet ist.

10. Antriebseinrichtung nach Anspruch 9 wobei das Eingriffselement (5a) korrespondierend zu einer Eingriffseinrichtung am Austriebskolben selbstfindend ausgebildet ist.

11. Antriebseinrichtung nach einem der vorangehenden Ansprüche, wobei die Getriebeeinheit (8) eine Planetengetriebeeinheit (22) der Antriebsmaschine mit einem primären Abtriebsrad (23) umfasst und eine schaltbare Kupplungseinrichtung (24) ein erstes Kupplungselement (24a) mit einem Antriebsritzel, welches mit dem primären Abtriebsrad im Eingriff steht, und ein zweites Kupplungselement (24b) umfasst, welches als das innen verzahnte Abtriebsrad (29) der Getriebeeinheit ausgebildet ist.

12. Antriebseinrichtung nach Anspruch 9 oder 10, wobei die schaltbare Kupplungseinrichtung als Klauenkupplung (24) ausgebildet ist.

13. Antriebseinrichtung nach Anspruch 11 oder 12, wobei die Getriebeeinheit (8) zum Antrieb des mit dem Gewinde versehenen Austriebskolbens (11) und mindestens eines weiteren, über eine Zahnstange (4) angetriebenen Austriebskolbens (16) einer anderen Komponente ausgebildet ist und eine unter Reaktionsdruck beim Austragen der anderen Komponente axial verschiebliche Baugruppe (19) hat und
das zweite Kupplungselement (24b) der schaltbaren Kupplungseinrichtung (24) in axialer Richtung im Wesentlichen fest bezüglich der verschieblichen Baugruppe positioniert ist, derart, dass es sich unter dem Reaktionsdruck beim Austrag der anderen Komponente mit der Baugruppe verschiebt und hierdurch in Eingriff mit dem ersten Kupplungselement (24a) kommt.

14. Applikationsgerät (1) für Mehrkomponentenstoffe, insbesondere Mehrkomponenten-Klebstoffe, mit einer Antriebseinrichtung (1 B) nach einem der vorangehenden Ansprüche, mit einer integrierten elektrischen Antriebsmaschine (9) und Akku-Stromversorgung (15) für diese sowie einer Bedien- und Steuereinheit (13, 14).

## Claims

1. Driving device (1B) of a metering and mixing apparatus (1A) for multi-component substances, especially multi-component adhesives, which has at least two cartridge holders (2, 3) for holding replaceable cartridges (2.1, 3.1) with individual substance components, a discharging device for simultaneous discharging of the substance components from the cartridges (2.1, 3.1) through component outlets with the aid of discharging pistons (11, 16) entering the cartridge holder (2, 3) or cartridges (2.1, 3.1), wherein at least one discharging piston (11) has a threading which can produce forward propulsion of this discharging piston (11) by rotation, and a mixing apparatus (7) connected to the component outlets, which mixes discharged substance components and discharges them in mixed form, with a transmission unit (8) for connection of a drive motor (9), especially electric, and a spindle-like discharging rod (5) of the discharging piston (11) provided with the threading, which in a rear part of its longitudinal extent based on the position of use has a spiral-toothed, non-self-locking spindle section (5b) and at the front end has an engaging element (5a) for engaging in the discharging piston (11), wherein the transmission unit has a driven wheel (29) with internal spiral toothing which is matched to the spiral toothing of the spindle section (5b).

2. Driving device according to claim 1, wherein the spiral-toothed spindle section (5b) has a lead of the spiral toothing between 45° and 65°, especially between 50° and 61°.

3. Driving device according to claim 1 or 2, wherein the spindle-like driving rod (5) consists essentially of steel and the internally toothed driven wheel (29) consists essentially of plastic.

4. Driving device according to one of the preceding claims, wherein in the front section of the discharging rod (5) outside of the spiral-toothed spindle section (5b) a following braking element (31, 31') is provided to guarantee axial movement of the discharging rod even during idling.

5. Driving device according to claim 4, wherein the following braking element (31') is designed as a following plastic brake.

6. Driving device according to claim 4, wherein the following braking element is designed as a following wrap spring housing (31).

7. Driving device according to one of the preceding claims, wherein on the spindle-like discharging rod (5) a position marking element (31) is provided for especially optical detection of the axial position of the discharging rod and thus indirectly of the discharging piston (11) which is engaged with it.

8. Driving device according to claim 7 and one of claims 4 to 6, wherein the position marking element is formed by or attached to the following braking element (31).

9. Driving device according to one of the preceding claims, wherein the engaging element (5a) is formed at the end of the discharging rod (5) as a polygonal element, Torx or claw element.

10. Driving device according to claim 9, wherein the engaging element (5a) corresponding to an engaging device on the discharging piston is designed to be self-locating.

11. Driving device according to one of the preceding claims, wherein the transmission unit (8) comprises a planetary transmission unit (22) of the drive motor with a primary driven wheel (23) and a switchable coupling device (24) comprises a first coupling element (24a) with a drive pinion engaging with the primary driven wheel and a second coupling element (24b) which is designed as the internally toothed driven wheel (29) of the transmission unit.

12. Driving device according to claim 9 or 10, wherein the switchable coupling device is designed as a claw coupling (24).

13. Driving device according to claim 11 or 12, wherein the transmission unit (8) is designed for driving the discharging piston (11) having the threading and at least one additional discharging piston (16) for another component, driven over a gear rack (4), and has an axially movable assembly (19) under reaction pressure when discharging the other component and the second coupling element (24b) of the switchable coupling device (24) is positioned essentially fixed in the axial direction relative to the movable assembly, in such a manner that under the reaction pressure, during discharge of the other component, it moves with the assembly and consequently engages with the first coupling element (24a).

14. Application device (1) for multi-component substances, especially multi-component adhesives, with a driving device (1B) according to one of the preceding claims, with an integrated electric drive motor (9) and battery power supply (15) for this as well as an operating and control unit (13, 14).

## Revendications

1. Dispositif d'entraînement (1B) d'un dispositif de dosage et de mélange (1A) pour des matières à plusieurs composants, en particulier des colles à plusieurs composants, qui présente au moins deux dispositifs de réception de cartouche (2, 3) destinés à recevoir des cartouches interchangeables (2.1, 3.1) avec des composants individuels, un dispositif d'expulsion pour l'expulsion simultanée des composants hors des cartouches (2.1, 3.1) à travers des sorties de composants à l'aide de pistons d'expulsion (11, 16) plongeant dans les dispositifs de réception de cartouche (2, 3) ou dans les cartouches (2.1, 3.1), dans lequel au moins un piston d'expulsion (11) présente un filet qui peut produire un avancement de ce piston d'expulsion (11) par une rotation, et un dispositif de mélange (7), qui est raccordé aux sorties de composants, qui mélange les composants expulsés et qui les expulse en mélange, avec une unité d'engrenages (8) pour le raccordement d'un moteur d'entraînement (9), en particulier électrique, et avec une tige d'expulsion en forme de broche (5) du piston d'expulsion (11) muni du filet, qui présente dans une partie arrière de son extension longitudinale, par rapport à la position d'utilisation, une partie de broche non autobloquante à denture spirale (5b) et à l'extrémité avant un élément de prise (5a) à engager dans le piston d'expulsion (11), dans lequel l'unité d'engrenages présente une roue de sortie (29) avec une denture spirale intérieure qui est adaptée à la denture spirale de la partie de broche (5b).

2. Dispositif d'entraînement selon la revendication 1, dans lequel la partie de broche à denture spirale (5b) présente une pente de la denture spirale comprise entre 45° et 65°, spécialement entre 50° et 61°.

3. Dispositif d'entraînement selon la revendication 1 ou 2, dans lequel la bielle de commande en forme de broche (5) est essentiellement composée d'acier et la roue de sortie à denture intérieure (29) est essentiellement composée de matière synthétique.

4. Dispositif d'entraînement selon l'une quelconque des revendications précédentes, dans lequel il est prévu dans la région avant de la tige d'expulsion (5), à l'extérieur de la partie de broche à denture spirale (5b), un élément de frein tournant (31, 31') destiné à garantir un mouvement axial de la tige d'expulsion également en fonctionnement au ralenti.

5. Dispositif d'entraînement selon la revendication 4, dans lequel l'élément de frein tournant (31') est formé par un élément de frein tournant en matière synthétique.

6. Dispositif d'entraînement selon la revendication 4, dans lequel l'élément de frein tournant est formé par un boîtier tournant à ressort enroulé (31).

7. Dispositif d'entraînement selon l'une quelconque des revendications précédentes, dans lequel il est prévu, sur la tige d'expulsion en forme de broche (5), un élément de marquage de position (31) pour la détection, en particulier optique, de la position axiale de la tige d'expulsion et dès lors indirectement du piston d'expulsion (11) en prise avec celle-ci.

8. Dispositif d'entraînement selon la revendication 7 et l'une quelconque des revendications 4 à 6, dans lequel l'élément de marquage de position est formé par l'élément de frein tournant (31) ou est monté sur celui-ci.

9. Dispositif d'entraînement selon l'une quelconque des revendications précédentes, dans lequel l'élément de prise (5a) à l'extrémité de la tige d'expulsion (5) est réalisé sous forme d'élément polygonal, d'élément Torx ou à griffes.

10. Dispositif d'entraînement selon la revendication 9, dans lequel l'élément de prise (5a) est formé avec positionnement automatique de façon correspondante à un dispositif de prise sur le piston d'expulsion.

11. Dispositif d'entraînement selon l'une quelconque des revendications précédentes, dans lequel l'unité d'engrenages (8) comprend une unité d'engrenages planétaires (22) du moteur d'entraînement avec une roue de sortie primaire (23) et un dispositif d'accouplement commutable (24) comprend un premier élément d'accouplement (24a) avec un pignon d'entraînement, qui est en prise avec la roue de sortie primaire, et un deuxième élément d'accouplement (24b), qui constitue la roue de sortie à denture intérieure (29) de l'unité d'engrenages.

12. Dispositif d'entraînement selon la revendication 9 ou 10, dans lequel le dispositif d'accouplement commutable est formé par un accouplement à griffes (24).

13. Dispositif d'entraînement selon la revendication 11 ou 12, dans lequel l'unité d'engrenages (8) est conçue pour l'entraînement du piston d'expulsion (11) muni du filet et d'au moins un autre piston d'expulsion (16) d'un autre composant, entraîné par une crémaillère (4), et il comporte un sous-groupe (19) mobile axialement sous une pression de réaction lors de l'expulsion de l'autre composant et le deuxième élément d'accouplement (24b) du dispositif d'accouplement commutable (24) est positionné de façon essentiellement fixe en direction axiale par rapport au sous-groupe mobile, de telle manière qu'il se déplace avec le sous-groupe sous la pression de réaction lors de l'expulsion de l'autre composant et qu'il vienne ainsi en prise avec le premier élément d'accouplement (24a).

14. Appareil d'application (1) pour des matières à plusieurs composants, en particulier des colles à plusieurs composants, avec un dispositif d'entraînement (1B) selon l'une quelconque des revendications précédentes, avec un moteur d'entraînement électrique intégré (9) et une alimentation électrique par accumulateur (15) pour celui-ci ainsi qu'avec une unité de conduite et de commande (13, 14).
